# EUROPEAN PATENT SPECIFICATION

(11) **EP 2 981 976 B1**
(45) Date of publication and mention of the grant of the patent: **14.12.2016**
(21) Application number: 13716257.4
(22) Date of filing: 05.04.2013
(51) Int. Cl.: H01B 7/29, H01B 7/14, H01B 3/18, H01B 3/28, H01B 3/30, H01B 3/52, H01B 7/02, H01B 7/04, H01B 9/06, H02G 15/18, H02G 15/24

(54) **MIXED SOLID INSULATION MATERIAL FOR A TRANSMISSION SYSTEM**
GEMISCHTES FESTES ISOLIERMATERIAL FÜR EIN ÜBERTRAGUNGSSYSTEM
MATÉRIAU D'ISOLATION SOLIDE MÉLANGÉ POUR UN SYSTÈME DE TRANSMISSION

(43) Date of publication of application: 10.02.2016
(73) Proprietor: ABB Schweiz AG, 5400 Baden (CH)
(72) Inventor: LIU, Rongsheng, S-723 48 Västerås (SE); HANSSON, Ola, S-371 32 Karlskrona (SE); CHANDRAMOULI, Vijaya, S-724 81 Västerås (SE); WIGGINTON, Katarina, S-371 52 Karlskrona (SE)
(74) Representative: Axell, Kristina
(86) International application number: PCT/EP2013/057209
(87) International publication number: WO 2014/161596

(56) References cited:
- EP-A1- 0 933 786
- EP-A2- 0 843 320
- WO-A1-2011/073709
- JP-A- S5 460 482
- JP-A- 2000 113 734
- JP-A- 2000 113 735

## Description

### THE FIELD OF THE INVENTION

The present invention refers to a transmission system, more specifically to a transmission system according to the pre-characterized portion of claim 1 as well as a use for said system.

### BACKGROUND OF THE INVENTION AND PRIOR ART

Insulation for transmission systems, such as power cables, cable joints, buses and the like, is important for the reliability of a transmission system. The reliability depends on the material used for covering the conductor or conductor layers. The geometry of the insulation material around the transmission system is also important. Insulation materials for direct or alternating current (DC or AC) power cables may be exposed to high stresses. This is especially true for insulation materials used in high voltage and extra/ultra high voltage (hereinafter collectively referred to as HV) systems. These insulation materials require a good combination of electrical, thermal and mechanical properties to provide a system having an optimal power transmission capacity.

To improve the performance of the transmission system, extruded insulation layers have been replaced by insulation layers that comprise a plurality of sublayers of paper sheets, and which are impregnated with an oil. These transmission systems can be used for transmission of about 450 kV at a working temperature of up to 55°C. In order to improve the transmission systems such that higher voltages can be transmitted and working temperatures can be increased, insulation materials have been developed, whereby the paper sheets, or at least a part of the paper sheets have been replaced by sheets comprising a laminate of paper and polymer material.

US 5,850,055 discloses an insulation layer for HV cables comprising paper/(radiated) polypropylene/paper laminate. The laminated material is arranged in a plurality of sublayers concentrically orientated in relation to a conductor. Each sublayer comprises one or more strips, which are arranged beside each other in a circumferential direction. The insulation layer is impregnated with a fluid, such as an alkyl naphthalene.

US 8,242,357 discloses a process for the preparation of impregnated insulation material for HV cables using different degrees of swelling of the insulation material. The insulation material may comprise laminated polyolefins, such as a polypropylene/paper laminate.

JP 2000-113734 discloses a HV power cable with an impregnated insulation layer comprising sublayers of polyolefin-resin-film strips that may be laminated with paper. Gaps formed between adjacent edges of the strips are covered by a strip of an adjacent sublayer.

JP 2001-023449 discloses a HV power cable comprising impregnated insulation material comprising sublayers of paper sheets or sheets of laminated polypropylene/paper.

The known transmission systems have a limited power transmission capacity due to limiting voltage that can be used in the transmission system and limiting working temperature. An increase in working temperature impairs the insulation layer, which impacts the durability of the transmission system. Repair of cables and the like, especially cables at the bottom of a sea or ocean, is costly and should preferably be prevented.

Although many improvements have been made to laminated insulation materials for transmission systems, there is still a need for improving the electrical performance of transmission systems.

With regard to high and ultra high voltage (HV) DC and HVDC for mass-impregnated non-draining (MIND) transmission systems there is a need for an improved insulation layer, especially with regards to insulation materials impregnated with high viscosity fluids.

### SUMMARY OF THE INVENTION

The object of the present invention is to provide a transmission system having an insulation layer that overcomes the problems mentioned above. One object is to provide a transmission system comprising an insulation layer that can be used in high voltage systems in order to transmit power with high capacity over long distances. Another object is to improve the reliability of transmission systems and to decrease aging and manufacturing costs for insulated transmission systems. A further object is to provide an insulation layer that can handle a higher working temperature, for example a temperature of up to about 80°C. One object is to provide a transmission system that has an improved power transmission capacity, whereby beside the higher working temperature, also the breakdown stress and electrical field stress distribution of the insulation material can be improved. Preferably, the transmission system can be used in HV-MIND and HVDC-MIND systems.

The objects are achieved by the transmission system initially defined according to the pre-characterized portion of claim 1, which is characterized in that each of the strips comprises one sheet, or more sheets arranged beside each other in a radial direction, whereby each sheet comprises an insulation material selected from the group comprising cellulose paper and polymer, and whereby the insulation layer comprises at least one sublayer comprising at least one sheet of said cellulose paper, and at least one sublayer comprising at least one sheet of said polymer, and whereby the insulation layer is impregnated.

The new insulation layer can be used for high voltage and ultra high voltage systems. The working temperature can also be increased to 75° to 85°C. The breakdown strength of the insulation layer has been improved and the DC leakage current has been decreased compared to known insulation layers.

Laminated sheets of polymer and paper according to the prior art are produced in a separate lamination process, whereby said two or more sheets are fixedly attached to each other, e.g. by gluing. Such pre-fabricated laminated material is more expensive compared to non-laminated sheets. Thus, by using individual sheets, or strips comprising more than one individually stacked sheets that are placed on top of each other, i.e. arranged beside each other in a radial direction, manufacturing costs and time can be saved.

Advantageously, the sheets are not fixedly attached to each other. In the insulation layer, the sheets may be individually and unaffixedly mixed with each other within the insulation layer. The sheets, or strips, may be individually applied to the insulation layer. The insulation layer may thus be successively built-up by individual sheets or strips.

In one embodiment, the sheets in each strip are individually arranged, and the sheets in each strip are not attached to each other. In another embodiment, the strips are individually arranged in each sublayer, and the strips are not attached to each other.

Because individual sheets of insulation material are used, the insulation layer can be manufactured using different combinations of insulation materials. The insulation layer can therefore be designed with great flexibility, whereby the type of material, the combinations of materials, and the number of sheets per strip can be adapted to any specific type of transmission system.

In one embodiment, the insulation layer comprises at least one sublayer all sheets of which are sheets of said cellulose paper, and at least one sublayer all sheets of which are sheets of said polymer.

The insulation layer can be manufactured efficiently if only one type of insulation material is used per sublayer.

In another embodiment, each strip comprises only one sheet.

Good results have been obtained by using one sheet of insulation material per strip per sublayer. Such insulation layer can be produced at relatively low costs.

In one embodiment, the one or more strips or sheets are wound on the conductor at an inclination angle in relation to a longitudinal axis extending along the conductor. In another embodiment, the one or more strips or sheets of one of the layer sections extend crosswise to the one or more strips or sheets of an adjacent layer section.

Transmission systems like cables are preferably flexible and not stiff. Winding the strips crosswise per adjacent layer section improves the flexibility of the overall transmission system.

In a further embodiment, the system further comprises an inner semiconductive layer circumferentially covering the conductor.

The new insulation layer may be used in different transmission systems. When used in HV systems, a semiconductive layer is usually present to level the electrical field.

In one embodiment, the sublayer of the insulation layer, which adjoins the inner semiconductive layer, is a sublayer of a paper sheet or paper sheets.

In another embodiment, the system further comprises an outer semiconductive layer circumferentially covering the insulation layer.

In a further embodiment, the sublayer of the insulation layer, which adjoins the outer semiconductive layer, is a sublayer of a paper sheet or paper sheets.

The breakdown strength depends, among other things, on the thickness of the material. Thinner material normally has a higher breakdown strength. By arranging the thinner paper layer of insulation material close to the inner and outer semiconductive layers, the breakdown strength will be high at locations where it is most likely to break down. The overall dielectric properties of the insulation layer are therefore improved. The risk of breakdown of the transmission system decreases. This insulation layer has reduced resistivity-governed E-stresses close to the semiconductive layer/insulation layer interfaces, while the resistivity-governed E-stresses are higher in a middle part of the insulation layer.

In one embodiment, the polymer is a plastic material or a rubber material.

In another embodiment, the plastic material is selected from polyethylene terephthalate (PET), biaxially-oriented polyethylene terephthalate (BOPET), polyester, polystyrene (PS), or polyolefin selected from polypropylene (PP), biaxially oriented polypropylene (BOPP), high density polyethylene (HDPE), cross-linked polyethylene (XLPE), moderate density PE (MDPE) and PE, or mixtures thereof.

In a further embodiment, the plastic material is polyethylene terephthalate (PET) or biaxially-oriented polyethylene terephthalate (BOPET), polypropylene (PP), biaxially oriented polypropylene (BOPP), or high density polyethylene (HDPE).

In one embodiment, the rubber material is selected from silicone rubber, ethylene propylene diene monomer rubber and ethylene propylene rubber, or mixtures thereof.

In another embodiment, the cellulose paper comprises Kraft paper.

The breakdown strength also depends on the type of material used in the insulation layer. Different transmission systems may have different requirements for the material. For example, the breakdown strength for polyethylene or polypropylene is higher than 200kV/mm at a thickness of 100 pm, while the breakdown strength for extruded cross-linked polyethylene can be below 65 kV/mm at a thickness of 9 mm. The new insulation material allows for great flexibility in choice of material used in the insulation layer.

In a further embodiment, the insulation layer is impregnated with a mass-impregnation compound selected from a mineral oil, a soft gel, a hard gel, or mixtures thereof.

In one embodiment, the mass-impregnation compound is a gellike compound that is liquid below a temperature of 85°C.

Breakdown strength is improved by increasing the density of the insulation layer. The impregnation compound increases the density of the insulation layer and will thus further improve the reliability of the transmission system and prevent space charging and aging.

The new transmission system is more reliable and robust and therefore expected to last longer than the transmission systems used today.

The invention also relates to a use of the transmission system defined above in high voltage or ultra high voltage, direct or alternating, current power systems. In one embodiment the transmission system is selected from cables, joints, terminations, bushings, insulated buses, bus bars and in semiconducting screening material together with acetylene carbon black.

### BRIEF DESCRIPTION OF THE DRAWINGS

The invention will now be explained more closely by means of a description of various embodiments and with reference to the drawings attached hereto.
- Fig 1: shows a schematic view of a cross section of a DC transmission system as a power cable.
- Fig 2: shows a schematic view of a cable joint insulated with insulation material.
- Fig 3: shows a DC transmission system as a power cable.
- Fig 4: shows an embodiment of the invention, whereby three strips per sublayer are shown.
- Fig 5: shows an embodiment of the invention, whereby one strip per sublayer is shown.
- Fig 6a,6b: shows one embodiment of the invention, whereby a sublayer comprises strips having one sheet.
- Fig 7: shows another embodiment of the invention, whereby a sublayer comprises strips having two sheets.
- Fig 8,8b: shows another embodiment of the invention, whereby a sublayer comprises strips having three sheets.
- Fig 9: shows a strip that is wound on a conductor.

### DETAILED DESCRIPTION OF VARIOUS EMBODIMENTS OF THE INVENTION

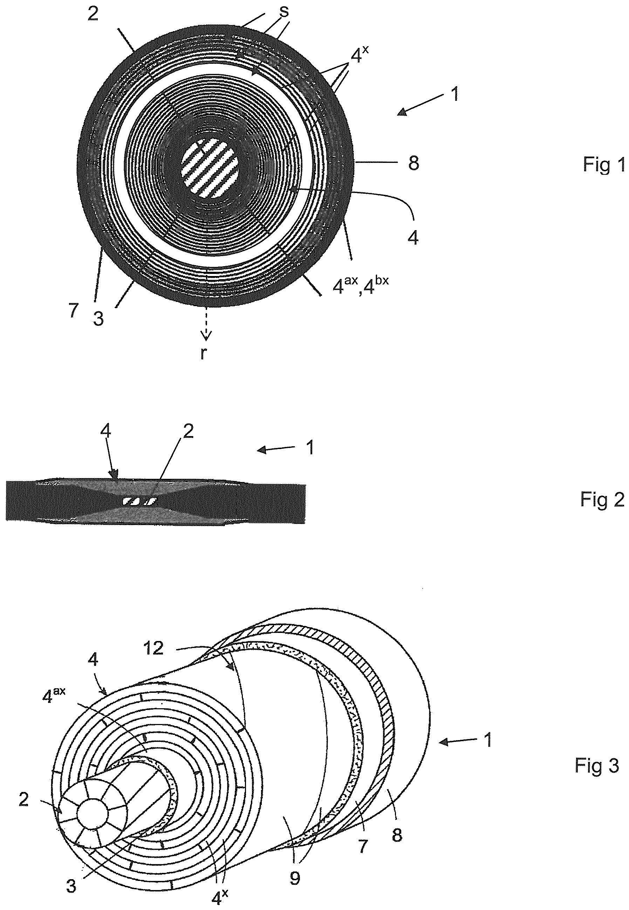

Fig 1 shows a (DC) transmission system 1 as a power cable. Other transmission system components may be a cable joint as shown in Fig 2. The transmission systems 1 or system components 1 may also be bushings, insulated buses, bus bars and cable terminations. One embodiment relates to cable terminations. Further transmission systems or system components 1 may be any electrical device that has insulation. Another embodiment relates to high and ultra high voltage DC ((U)HVDC) transmission systems 1, preferably (U)HVDC systems or system components for mass-impregnated non-draining (MIND) transmission systems or system components 1.

The transmission system 1 according to the present invention comprises a conductor 2, or a bundle of conductors 2. This conductor 2 extends along a longitudinal y-axis and is circumferentially covered by an insulation layer 4. The insulation layer 4 may be covered by a sheath 8.

For some transmission systems 1, such as HVDC cables, the conductor 2 may be circumferentially covered by an inner semiconductive layer 3, which layer 3 is then covered by the insulation layer 4. The insulation layer 4 may be circumferentially covered by an outer semiconductive layer 7. The outer semiconductive layer 7 may be covered by a sheath 8, which may be lead or another metal. This sheath 8 may be further covered by a protection layer (not shown) that may also have insulation and mechanical properties such as a plastic or rubber material.

As shown in Fig 1, the new insulation layer 4 according to the present invention, comprises two or more layer sections s. The layer sections s comprise each a plurality of sublayers 4 x. Each sublayer 4^{x} is concentrically orientated in relation to the conductor 2 (Fig 3, 4 and 5).

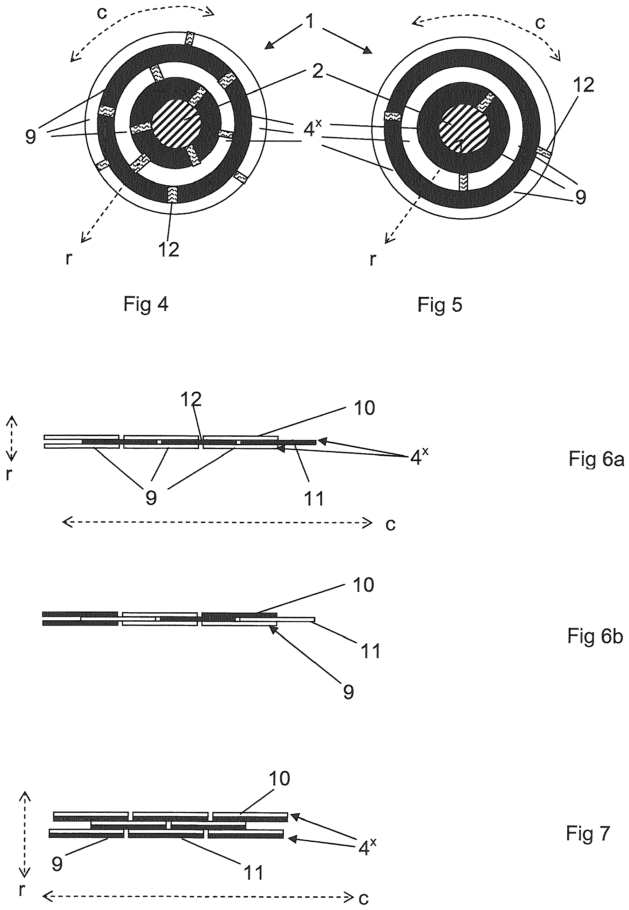

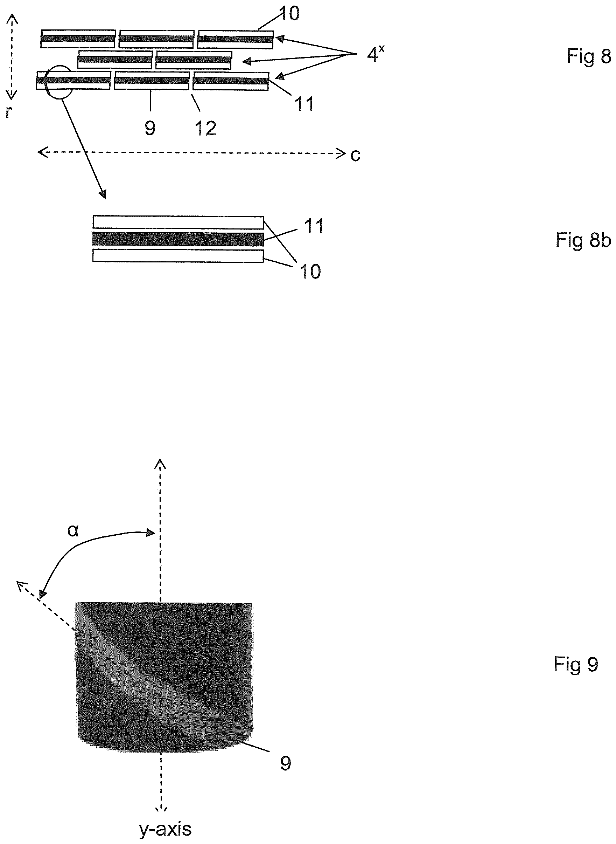

Each sublayer 4^{x} comprises one or more strips 9. As shown in Fig 9, preferably each strip 9 is wound on the conductor 2 at an inclination angle a in relation to a longitudinal axis y that extends along the conductor 2. Each sublayer 4^{x} may comprise one strip 9 that is wound at an inclination angle a on the conductor 2 (Fig 5).

The sublayer 4^{X} may comprise two or more strips 9 that are wound at an inclination angle α on the conductor 2 (Fig 4). In this case, the strips 9 are arranged beside each other in a circumferential direction c. The exact width of the strips 9 may vary depending on the transmission system 1. For HVDC cables a strip 9 may have a width between 0.5 and 10 cm, or 0.5 and 5 cm, or 1 and 3 cm.

A gap 12 is formed between adjacent edges of one single strip 9 or of a plurality of strips 9. The width of the gap 12 may vary depending on the transmission system 1. The width of the gaps 12 may be the same within one insulation layer 4 or the width of the gaps 12 may vary within the insulation layer 4, e.g. the width of the gaps 12 may be different in different layer sections s. The gap 12 may have a width between 0.0001 mm and 10 mm, or between 0.001 mm and 8 mm, or between 0. 01 mm and 5 mm, between 0.01 mm and 8 mm.

As shown in Fig 4 to 8, each gap 12 is covered by a strip 9 of an adjacent sublayer 4^{x} provided outside the gap 12. The gap 12 or gaps 12 in the outermost sublayer 4^{x} is, however, covered by the sheath 8 or the semiconductive layer 7. This arrangement provides for an optimal spreading and confinement of an impregnation compound within the insulation layer 4.

Figs 6 to 8 show schematically a cross section of a part of the insulation layer 4, whereby the circumferential direction c is illustrated straight in stead of curved as in e.g. Fig 4, 5.

Each strip 9 may comprise one sheet 10, 11, whereby the sheets 10, 11 are arranged beside each other in the circumferential direction c. Fig 6a and Fig 6b shows sublayers 4^{x} comprising three strips 9 arranged beside each other, whereby each strip 9 comprises one sheet 10, 11.

Each strip may also comprise two, three, four or more sheets 10, 11. The sheets 10, 11 are arranged in a radial direction r within each strip 9 as illustrated in Fig 7 and 8. The strips 9 are arranged beside each other in the circumferential direction c. In Fig 7 each strip 9 comprises two sheets 10, 11 and in Fig e8 each strip 9 comprises three sheets 10, 11. In Fig 8b a magnification of a strip 9 is shown to illustrate that the sheets 10, 11 within the strip 9 are not fixedly attached to each other.

The sheets 10, 11 comprise, or are made of, insulation material. Different materials may be used in different transmission systems 1. According to the present invention, the insulation material comprises at least sheets of cellulose paper 10 and sheets of polymer 11. Other insulation material may be added.

The cellulose paper sheets 10 and polymer sheets 11, and optionally other sheets, may be arranged and mixed in any possible way within the insulation layer 4. One sublayer 4^{x} may comprise sheets of one insulation material only (fig 4, 5, 6a). One sublayer 4^{x} may also comprise sheets of a mixture of insulation materials (Fig 6b). The present invention is not limited to any particular way of mixing the sheets 10, 11 within the insulation layer 4.

The insulation layer 4 is manufactured by winding strip 9 or sheets 10, 11 on the conductor 2 (or semiconductive layer 3, or the like). The strips 9 may be pre-fabricated as a multi-sheet-layer prior to winding, by stacking individual sheets 10, 11, unaffixedly, to form a strip 9.

It may however, be more efficient to manufacture the insulation layer 4 by using one sheet 10, 11 per winding. The sheets 10, 11 may be wound such that the sheets form a sublayer 4^{x} and overlap each other per sublayer 4^{x}. In this case, the sheets 10, 11 will overlap the gaps 12 in the adjacent sublayer 4^{x} (fig 6a, 6b).

Alternatively, per sublayer 4^{x}, the sheets 10, 11 may be wound on top of each other such that a strip 9 comprising more than one sheet 10, 11 is formed during the manufacturing of the insulation layer 4. In this case, the strips 9 will overlap the gaps 12 in the adjacent sublayer 4^{x} (Fig 7, 8).

The sheets 10, 11 may be wound such that the sheets 10, 11 comprise of one insulation material per sublayer 4^{x}, such as cellulose paper or polymer (Fig 6a). However, the winding may be performed such that sheets 10, 11 comprise different insulation material, such as cellulose paper and polymer (Fig 6b). A strip 9 may comprise more than one sheet 10, 11 of different or the same insulation material. For example, a strip may comprise two sheets of paper cellulose 10 or two sheets of polymer 11 or one sheet of polymer 11 and two sheets of paper 10, etc. (Fig 7, 8).

The arrangement of the cellulose paper sheets 10 and the polymer sheets 11 may be different in different parts or layer sections s of the insulation layer 4. For example, the outermost sublayer 4^{ax}, 4^{bx}, or two or more of the outermost sublayers 4^{ax}, 4^{bx}, may comprise only or substantially only cellulose paper sheets 10. The rest of the insulation layer 4 may comprise a mixture of insulation materials such as a number ratio of cellulose paper sheets 10 to polymer sheets 11 between 20 and 80%, or 80 and 20%.

In one embodiment, the one or more outer sublayers 4^{ax}, 4^{bx} (for example 1 to 20 sublayers 4^{ax}, 4^{bx}) consist of cellulose paper sheets 10, and the rest of the insulation layer 4 comprises a mixture of cellulose paper sheets 10 and polymer sheets 11 at a number ratio of cellulose paper sheets 10 to polymer sheets 11 between 40 and 60%, or 60 and 40%, or about 50%.

The cellulose paper used may differ and any cellulose paper used in the art may be suitable. For example, Kraft paper may be used. This Kraft paper may have different resistivities, such as different resistivities in different layer sections s.

The polymer material may be any plastic and/or rubber material used in the art, which has insulation properties. The material used may be different depending on the application of the transmission system 1, e.g. low voltage, medium voltage or high voltage systems.

Examples of plastic materials, but not limited thereto, may be one of polyolefins such as polyethylene (PE), which may be low density polyethylene (linear or not) (LDPE), medium density polyethylene (MDPE), high density polyethylene (HDPE), cross-linked polyethylene (XLPE), or polypropylene (PP) and polybutylene. Other examples of the plastic material may be polyethylene terephthalate (PET) and biaxially-oriented polyethylene terephthalate (BOPET). Other plastic materials may be polyester, polystyrene (PS), biaxially oriented polypropylene (BOPP), aramid, polyvinyl chloride or polyimide. Alternatively, mixtures of plastic materials may be used. In one embodiment, polypropylene is used. In another embodiment, PET is used. In a further embodiment, PP is used. In one embodiment, BOPP is used. In another embodiment, HDPE is used.

Examples of rubber materials, but not limited thereto, may be one of silicone rubber, ethylene propylene diene monomer rubber and ethylene propylene rubber. Alternatively, mixtures of rubber materials may be used.

The insulation layer 4 comprises cellulose paper and polymer. The insulation layer 4 may comprise further insulation materials. The material used may be one or mixtures of plastic material, or one or mixtures of rubber material. The material used may also be a mixture of plastic and rubber materials.

The different insulation materials in the insulation layer 4 may have different densities. The density in the outermost sublayers 4^{ax}, 4^{bx} may be higher compared to the density in rest of the insulation layer 4. The insulation layer 4 may also be divided into two or more layer sections s having different densities. The different densities may be provided by using paper and/or plastic or rubber material having different densities. By for example using substantially only paper sheets 10 in the outermost sublayers 4^{ax}, 4^{bx}, the resistivity-governed E-stresses in the outermost sublayers 4^{ax}, 4^{bx} are lower compared with the resistivity-governed E-stresses in rest of the insulation layer 4. Different densities may also be provided by using different impregnation compounds. The pressure force of winding of the strips 9 is also important for the overall density of the insulation layer 4.

The insulation layer 4 may also be divided into two or more layer sections s having different resistivities. This may be achieved by, for example, varying the number ratio of cellulose paper sheets 10 to polymer sheets 11 per layer section s, or by varying the thickness of the sheets 10, 11 used, or by varying the type of material used. These different layer sections s can be used to further improve the resistivity control in the insulation layer 4.

Thus, the insulation layer 4 may comprise only two different insulation materials, i.e. cellulose paper and polymer. Only one type of cellulose paper and one type of polymer may be used in one insulation layer 4.

Alternatively, different types of cellulose paper and/or different types of polymers may be used in different layer sections s within one insulation layer 4.

Or the insulation layer 4 may comprise, in addition to cellulose paper and polymer, one or more other insulation materials, in one or more layer sections s of the insulation layer 4. Any and all combinations of insulation material that can be used in the insulation layer 4 according to the invention are included within the scope of the present invention.

The resistivity p in the outermost sublayers 4^{ax}, 4^{bx} of the insulation layer 4 may be less than 10¹⁴ Ω.m or less than 10¹⁰ Ω.m, and the resistivity p in the rest of the insulation layer 4 may be more than 10¹⁴ Ω.m, or more than 10¹⁰ Ω.m.

Preferably, the transmission system 1 is able to deliver voltages in an amount of over 500 kV, preferably at and/or over 800 kV. The E-stress of the insulation layer 4 is preferably above 22 kV/mm.

The thickness of the sheets 10, 11 may be varied depending on the application of the transmission system 1. The thickness may even be varied within one insulation layer 4, e.g. different layer sections s may have sheets 10, 11 having different thicknesses. The cellulose paper sheets 10 may have a thickness between 0.1 and 500 μm, or 1 and 200 μm, or 20 and 150 μm. The polymer sheets 11 may have a thickness between 1 and 1000 μm, or 25 and 500 μm, or 30 and 200 μm.

The insulation layer 4 may be impregnated with a mass-impregnation compound, which may be a liquid or a gas. Liquids may be any liquids used in the art such as mineral oils and/or ester fluids. Gases may be selected from sulfur hexafluoride, compressed air and/or nitrogen.

The insulation material may be impregnated with a high viscosity fluid such as a gel-like liquid, for example a so-called soft gel. The viscosity of the mass-impregnation compound is preferably high enough to be non-draining. Preferably, the viscosity does not change at the operational temperatures of the transmission system 1. During operations, the mass-impregnation compound is preferably allowed to flow within the insulation layer 4, e.g. in and out of the gaps 12.

The high viscosity fluid, such as a soft-gel compound, may be liquid below a temperature of 120°C, or 100°C, 90°C, 80°C or 70°C.The viscosity of the fluid is at least more than 501, or 1000, or 5000, 10,000 centistokes (cSt) at 65°C, or at 80°C. For processability, the fluid may have a lower viscosity above 100°C, or above 110°C.

A suitable insulating fluid is T2015 (H&R ChemPharm Ltd.(UK), which is based on mineral oil with about 2% by weight of a high molecular weight polyisobutene as viscosity increasing agent. T2015 has a viscosity at 60°C of about 1200 cSt. Other examples of suitable insulating fluids are gelling compositions such as those disclosed in US 6,383,634, which is hereby incorporated by reference. These gelling compositions may comprise an oil and a gelator and have a thermo-reversible liquid-gel transition at a transition temperature Tₜ, wherein the gelling composition at temperatures below Tₜ has a first viscosity and at temperatures above Tₜ a second viscosity, which is less than the first viscosity. The composition comprises molecules of a polymer compound having a polar segment capable of forming hydrogen bonds together with fine dielectric particles having a particle size of less than 1000 nm.

The present invention also relates to a method for preparing the transmission system 1 described above.

In a first step of the method the conductor layer 2 is provided and optionally circumferentially covered by a semiconductive layer 3.

In a second step, the sheets 10, 11 that are to be wound on the conductor 2 (or optionally on the semiconductive layer 3) are dried at low humidity (below about 10%, or 4%). Water that may be present in the sheets 10, 11 need to be removed to improve the electrical properties of the transmission system 1. However, the sheets 10, 11 cannot be dried too much, because this might make it difficult to wind the sheets 10, 11.

In a next step, the strips 9 or sheets 10, 11 are wound on the conductor 2 (or optionally on the semiconductive layer 3). The obtained product is then dried in vacuum until a dielectric constant in the insulation layer 4 has reached a steady state, or alternatively, the dielectric dissipation factor (power factor) of the insulation layer has reduced to a certain low level, for example to less than 0.003 at 100 °C.

The strips 9 may be wound in different ways on the conductor 2. Fig 9 shows an example of how a strip 9 can be wound at an inclination angle α in relation to the longitudinal y-axis that extends along the conductor 2. The inclination angle α may be between 0 to 180°. Preferably, the strips 9 are wound in alternating angles α such that 3, preferably 10 to 30 strips 9 are wound at an inclination angle between 0 to 90°, and the subsequent 3, preferably 10 to 30 strips 9 are wound at an inclination angle between 90 to 180°, i.e. crosswise.

In a following step, the insulation layer 4 is impregnated with an impregnation compound. The impregnation continues until a dielectric constant in the insulation layer 4 has reached a steady state.

In a next step, the insulation layer may be circumferentially covered by a sheath 8, or optionally a semiconductive layer 7 and then a sheath 8.

The method is performed at elevated temperatures between 100 and 130°C. The temperature may depend on the specific material used, the length and thickness of the cable, etc.

The term "conductor" as used herein, means a conductor or a superconductor, which may be one or more conductors bundled together.
The wording "between" as used herein includes the mentioned values and all values in between these values. Thus, a value between 1 and 2 mm includes 1 mm, 1.654 mm and 2 mm.
The wording "low density" as used herein means densities between 0.80 and 0.97 g/cm³, preferably between 0.90 and 0.93 g/cm³.
The wording "high density" as used herein means densities between 0.90 and 0.999 g/cm³, preferably above 0.935 and below 0.97 g/cm³.
The wording "gel-like compound" as used herein means a compound that, by weight, is mostly liquid, yet behaves like a solid due to a three-dimensional cross-linked network within the liquid.
The wording "transmission system" as used herein is meant to include all and any applications for insulation materials such as for example cables, joints, terminations, bushings, insulated buses, bus bars and in semiconducting screening material together with acetylene carbon black.

The wording "high voltage or HV" as used herein is meant to include high voltage and ultra high voltage (UHV) in direct current or alternating current systems.

The present invention is not limited to the embodiments disclosed but may be varied and modified within the scope of the following claims.

## Claims

1. A transmission system (1) comprising
- an electrical conductor (2) having a longitudinal extension,
- an insulation layer (4) circumferentially covering the conductor (2) and comprising at least two layer sections (s) each comprising a plurality of sublayers (4^{x}) concentrically orientated in relation to the conductor (2), whereby each sublayer (4^{x}) comprises one or more strips (9) arranged beside each other in a circumferential direction (c) so that a gap (12) is formed between adjacent edges of the strips (9), and whereby each gap (12), except for the gap or gaps (12) in the outermost sublayer (4^{ax}, 4^{bx}), is covered by a strip (9) of an adjacent sublayer (4^{x}),
**characterized in that** each of the strips (9) comprises one sheet (10, 11), or more sheets (10, 11) arranged beside each other in a radial direction (r), whereby each sheet (10, 11) comprises an insulation material selected from the group comprising cellulose paper and polymer, and whereby the insulation layer (4) comprises at least one sublayer (4^{x}) comprising at least one sheet (10) of said cellulose paper, and at least one sublayer (4^{x}) comprising at least one sheet (11) of said polymer, and whereby the insulation layer (4) is impregnated, and
whereby the sheets are not fixedly attached to each other.

2. The transmission system (1) according to claim 1, whereby the insulation layer (4) comprises at least one sublayer (4^{x}) all sheets of which are sheets (10) of said cellulose paper, and at least one sublayer (4^{x}) all sheets of which are sheets (11) of said polymer.

3. The transmission system (1) according to claim 1 or 2, whereby each strip (9) comprises only one sheet (10, 11).

4. The transmission system (1) according to any one of claims 1 to 3, whereby the one or more strips (9) are wound on the conductor (2) at an inclination angle (α) in relation to a longitudinal axis (y) extending along the conductor (2).

5. The transmission system (1) according to claim 4, whereby the one or more strips (9) or sheets (10, 11) of one of the layer sections (s) extend crosswise to the one or more strips (9) or sheets (10, 11) of an adjacent layer section (s).

6. The transmission system (1) according to any one of claims 1 to 5, whereby the system (1) further comprises an inner semiconductive layer (3) circumferentially covering the conductor (2).

7. The transmission system (1) according to claim 6, whereby the sublayer (4^{x}) of the insulation layer (4), which adjoins the inner semiconductive layer (3), is a sublayer (4^{x}) of a paper sheet (10) or paper sheets (10).

8. The transmission system (1) according to any one of claims 1 to 7, whereby the system (1) further comprises an outer semiconductive layer (7) circumferentially covering the insulation layer (4).

9. The transmission system (1) according to claim 8, whereby the sublayer (4^{x}) of the insulation layer (4), which adjoins the outer semiconductive layer (7), is a sublayer (4^{x}) of a paper sheet (10) or paper sheets (10).

10. The transmission system (1) according to any one of claims 1 to 9, whereby the polymer is a plastic material or a rubber material.

11. The transmission system (1) according to claim 10, whereby the plastic material is selected from polyethylene terephthalate (PET), biaxially-oriented polyethylene terephthalate (BOPET), polyester, polystyrene (PS), or polyolefin selected from polypropylene (PP), biaxially oriented polypropylene (BOPP), high density polyethylene (HDPE), cross-linked polyethylene (XLPE), moderate density PE (MDPE) and PE, or mixtures thereof.

12. The transmission system (1) according to claim 10, whereby the plastic material is polyethylene terephthalate (PET), biaxially-oriented polyethylene terephthalate (BOPET), polypropylene (PP), biaxially oriented polypropylene (BOPP), or high density polyethylene (HDPE).

13. The transmission system (1) according to claim 10, whereby the rubber material is selected from silicone rubber, ethylene propylene diene monomer rubber and ethylene propylene rubber, or mixtures thereof.

14. The transmission system (1) according to any one of claims 1 to 13, whereby the cellulose paper comprises Kraft paper.

15. The transmission system (1) according to any one of claims 1 to 14, whereby the insulation layer (4) is impregnated with a mass-impregnation compound selected from a mineral oil, a soft gel, a hard gel, or mixtures thereof.

16. The transmission system (1) according to claim 15, whereby the mass-impregnation compound is a gel-like compound that is liquid below a temperature of 85°C.

17. Use of the transmission system (1) according to any one of claims 1 to 16 in high voltage or ultra high voltage, direct or alternating, current power systems.

## Patentansprüche

1. Übertragungssystem (1), umfassend
- einen elektrischen Leiter (2) mit einer Längsausdehnung,
- eine Isolierschicht (4), die den Leiter (2) entlang des Umfangs abdeckt und mindestens zwei Schichtabschnitte (s) aufweist, die jeweils eine Mehrzahl von Teilschichten (4^{X}) umfassen, die konzentrisch in Bezug auf den Leiter (2) ausgerichtet sind, wobei jede Teilschicht (4^{X}) einen oder mehrere Streifen (9) umfasst, die nebeneinander in einer Umfangsrichtung (c) angeordnet sind, sodass ein Spalt (12) zwischen benachbarten Kanten der Streife (9) gebildet wird, und wobei jeder Spalt (12) mit Ausnahme des Spalts oder der Spalte (12) und der äußersten Teilschicht (4^{ax}, 4^{bx}) von einem Streifen (9) einer benachbarten Teilschicht (4^{X}) abgedeckt wird.
**dadurch gekennzeichnet, dass** jeder der Streifen (9) eine Lage (10, 11) oder mehrere Lagen (10, 11) umfasst, die nebeneinander in einer radialen Richtung (r) angeordnet sind, wobei jede Bahn (10, 11) ein Isoliermaterial umfasst, das ausgewählt ist aus der Gruppe umfassend Cellulosepapier und Polymer, und wobei die Isolierschicht (4) mindestens eine Teilschicht (4^{X}), die mindestens eine Lage (10) aus dem Cellulosepapier umfasst, und mindestens eine Teilschicht (4^{X}) umfasst, die mindestens eine Lage (11) aus dem Polymer umfasst, und wobei die Isolierschicht (4) imprägniert ist, und wobei die Lagen nicht fest aneinander gebunden sind.

2. Übertragungssystem (1) nach Anspruch 1, wobei die Isolierschicht (4) mindestens eine Teilschicht (4^{X}), deren aller Lagen Lagen (10) aus Cellulosepapier sind, und mindestens eine Teilschicht (4^{X}) umfasst, deren aller Lagen Lagen (11) aus dem Polymer sind.

3. Übertragungssystem (1) nach Anspruch 1 oder 2, wobei jeder Streifen (9) nur eine Lage (10, 11) umfasst.

4. Übertragungssystem (1) nach einem der Ansprüche 1 bis 3, wobei die einen oder mehreren Streifen (9) in einem Neigungswinkel (α) in Bezug auf eine Längsachse (γ), die sich entlang des Leiters (2) erstreckt, auf den Leiter (2) gewickelt sind.

5. Übertragungssystem (1) nach Anspruch 4, wobei sich die einen oder mehreren Streifen (9) oder Lagen (10, 11) einer der Schichtabschnitte (s) kreuzweise zu dem einen oder den mehreren Streifen (9) oder Lagen (10, 11) eines benachbarten Abschnitts (s) erstrecken.

6. Übertragungssystem (1) nach einem der Ansprüche 1 bis 5, wobei das System (1) ferner eine innere halbleitfähige Schicht (3) umfasst, die den Leiter (2) entlang des Umfangs abdeckt.

7. Übertragungssystem (1) nach Anspruch 6, wobei die Teilschicht (4^{X}) der Isolierschicht (4), die an die innere halbleitfähige Schicht (3) angrenzt, eine Teilschicht (4^{X}) einer Papierlage (10) oder von Papierlagen (10) ist.

8. Übertragungssystem (1) nach einem der Ansprüche 1 bis 7, wobei das System (1) ferner eine äußere halbleitfähige Schicht (7) umfasst, welche die Isolierschicht (4) entlang des Umfangs abdeckt.

9. Übertragungssystem (1) nach Anspruch 8, wobei die Teilschicht (4^{X}) der Isolierschicht (4), die an die äußere halbleitfähige Schicht (7) angrenzt, eine Teilschicht (4^{X}) einer Papierlage (10) oder von Papierlagen (10) ist.

10. Übertragungssystem (1) nach einem der Ansprüche 1 bis 9, wobei das Polymer ein Kunststoffmaterial oder ein Kautschukmaterial ist.

11. Übertragungssystem (1) nach Anspruch 10, wobei das Kunststoffmaterial ausgewählt ist aus Polyethylenterephthalat (PET), biaxial orientiertem Polyethylenterephthalat (BOPET), Polyester, Polystyrol (PS) oder Polyolefin, das ausgewählt ist aus Polypropylen (PP), biaxial orientiertem Polypropylen (BOPP), Polyethylen von hoher Dichte (HDPE), vernetztem Polyethylen (XLPE), PE von mittlerer Dichte (MDPE) und PE oder Mischungen davon.

12. Übertragungssystem (1) nach Anspruch 10, wobei das Kunststoffmaterial Polyethylenterephthalat (PET), biaxial orientiertes Polyethylenterephthalat (BOPET), Polypropylen (PP), biaxial orientiertes Polypropylen (BOPP) oder Polyethylen von hoher Dichte (HDPE) ist.

13. Übertragungssystem (1) nach Anspruch 10, wobei das Kautschukmaterial ausgewählt ist aus Silikon-Kautschuk, Ethylen-Propylen-Dien-Monomer-Kautschuk und Ethylen-Propylen-Kautschuk oder Mischungen davon.

14. Übertragungssystem (1) nach einem der Ansprüche 1 bis 13, wobei das Cellulosepapier Kraftpapier umfasst.

15. Übertragungssystem (1) nach einem der Ansprüche 1 bis 14, wobei die Isolierschicht (4) mit einer Masseimprägnierverbindung imprägniert ist, die ausgewählt ist aus einem Mineralöl, einem Weichgel, einem Hartgel oder Mischungen davon.

16. Übertragungssystem (1) nach Anspruch 15, wobei die Masseimprägnierverbindung eine gelähnliche Verbindung ist, die unter einer Temperatur von 85 °C flüssig ist.

17. Verwendung des Übertragungssystems (1) nach einem der Ansprüche 1 bis 16 in Hochspannungs- oder Ultrahochspannungs-, Gleich- oder Wechselstrom-Leistungssystemen.

## Revendications

1. Système de transmission (1) comprenant :
- un conducteur électrique (2) comportant un prolongement longitudinal,
- une couche d'isolation (4) recouvrant circonférentiellement le conducteur (2) et comprenant au moins deux sections de couches (s) comprenant chacune une pluralité de sous-couches (4^{x}) orientées concentriquement par rapport au conducteur (2), dans lequel chaque sous-couche (4^{x}) comprend une ou plusieurs bandes (9) disposées côte à côte dans une direction circonférentielle (c) de telle sorte qu'un intervalle (12) soit formé entre des bords adjacents des bandes (9), et dans lequel chaque intervalle (12), excepté l'intervalle ou les intervalles (12) dans la sous-couche située le plus à l'extérieur (4^{ax}, 4^{bx}), est recouvert par une bande (9) d'une sous-couche adj acente (4^{x}),
**caractérisé en ce que** chacune des bandes (9) comprend une feuille (10, 11), ou plus de feuilles (10, 11) disposées côte à côte dans une direction radiale (r), dans lequel chaque feuille (10, 11) comprend un matériau d'isolation sélectionné dans le groupe comprenant un papier cellulosique et un polymère, et dans lequel la couche d'isolation (4) comprend au moins une sous-couche (4^{x}) comprenant au moins une feuille (10) dudit papier cellulosique, et au moins une sous-couche (4^{x}) comprenant au moins une feuille (11) dudit polymère, et dans lequel la couche d'isolation (4) est imprégnée, et
les feuilles n'étant pas fixées à demeure les unes aux autres.

2. Système de transmission (1) selon la revendication 1, dans lequel la couche d'isolation (4) comprend au moins une sous-couche (4^{x}) dont toutes les feuilles sont des feuilles (10) dudit papier cellulosique, et au moins une sous-couche (4^{x}) dont toutes les feuilles sont des feuilles (11) dudit polymère.

3. Système de transmission (1) selon la revendication 1 ou 2, dans lequel chaque bande (9) comprend une seule feuille (10, 11).

4. Système de transmission (1) selon l'une quelconque des revendications 1 à 3, dans lequel lesdites une ou plusieurs bandes (9) sont enroulées sur le conducteur (2) à un angle d'inclinaison (α) par rapport à un axe longitudinal (y) se prolongeant le long du conducteur (2).

5. Système de transmission (1) selon la revendication 4, dans lequel lesdites une ou plusieurs bandes (9) ou feuilles (10, 11) d'une des sections de couches (s) se prolongent en travers desdites une ou plusieurs bandes (9) ou feuilles (10, 11) d'une section de couches adjacente (s).

6. Système de transmission (1) selon l'une quelconque des revendications 1 à 5, le système (1) comprenant en outre une couche semi-conductrice interne (3) recouvrant circonférentiellement le conducteur (2).

7. Système de transmission (1) selon la revendication 6, dans lequel la sous-couche (4^{x}) de la couche d'isolation (4), qui est contiguë à la couche semi-conductrice interne (3), est une sous-couche (4x) constituée d'une feuille de papier (10) ou de feuilles de papier (10).

8. Système de transmission (1) selon l'une quelconque des revendications 1 à 7, le système (1) comprenant en outre une couche semi-conductrice externe (7) recouvrant circonférentiellement la couche d'isolation (4).

9. Système de transmission (1) selon la revendication 8, dans lequel la sous-couche (4^{x}) de la couche d'isolation (4), qui est contiguë à la couche semi-conductrice externe (7), est une sous-couche (4x) constituée d'une feuille de papier (10) ou de feuilles de papier (10).

10. Système de transmission (1) selon l'une quelconque des revendications 1 à 9, dans lequel le polymère est une matière plastique ou un matériau en caoutchouc.

11. Système de transmission (1) selon la revendication 10, dans lequel la matière plastique est sélectionnée parmi le téréphtalate de polyéthylène (PET), le téréphtalate de polyéthylène orienté biaxialement (BOPET), le polyester, le polystyrène (PS), ou une polyoléfine sélectionnée parmi le polypropylène (PP), le polypropylène orienté biaxialement (BOPP), le polyéthylène de haute densité (HDPE), le polyéthylène réticulé (XLPE), le PE de densité modérée (MDPE) et le PE, ou des mélanges de ceux-ci.

12. Système de transmission (1) selon la revendication 10, dans lequel la matière plastique est le téréphtalate de polyéthylène (PET), le téréphtalate de polyéthylène orienté biaxialement (BOPET), le polypropylène (PP), le polypropylène orienté biaxialement (BOPP), ou le polyéthylène de haute densité (HDPE).

13. Système de transmission (1) selon la revendication 10, dans lequel le matériau en caoutchouc est sélectionné parmi le caoutchouc de silicone, le caoutchouc EPDM (éthylène-propylène-diène monomère) et le caoutchouc d'éthylène-propylène, ou des mélanges de ceux-ci.

14. Système de transmission (1) selon l'une quelconque des revendications 1 à 13, dans lequel le papier cellulosique comprend le papier kraft.

15. Système de transmission (1) selon l'une quelconque des revendications 1 à 14, dans lequel la couche d'isolation (4) est imprégnée d'un composé d'imprégnation dans la masse sélectionné parmi une huile minérale, un gel mou, un gel dur, ou des mélanges de ceux-ci.

16. Système de transmission (1) selon la revendication 15, dans lequel le composé d'imprégnation dans la masse est un composé similaire à un gel qui est liquide à une température inférieure à 85 °C.

17. Utilisation du système de transmission (1) selon l'une quelconque des revendications 1 à 16 dans des systèmes d'alimentation en courant à haute tension ou à ultra-haute tension, continu ou alternatif.
